# EUROPEAN PATENT SPECIFICATION

(11) **EP 4 484 385 B1**
(45) Date of publication and mention of the grant of the patent: **29.04.2026**
(21) Application number: 23382658.5
(22) Date of filing: 28.06.2023
(51) Int. Cl.: C03B 9/193, B65D 1/02, B65D 43/02, C03B 9/325, C03B 9/34, C03B 9/347, C03B 9/36, C03B 9/38, C03B 9/447

(54) **IMPROVED AUTOMATED PRODUCTION METHOD AND MANUFACTURING TOOLING THEREOF**
VERBESSERTES AUTOMATISIERTES HERSTELLUNGSVERFAHREN UND HERSTELLUNGSWERKZEUG DAFÜR
PROCÉDÉ AMÉLIORÉ DE PRODUCTION AUTOMATISÉE ET OUTILLAGE DE FABRICATION ASSOCIÉ

(43) Date of publication of application: 01.01.2025
(73) Proprietor: DSIGNTANK S.L., 08005 Barcelona (ES)
(72) Inventor: ARREGUI LETAMENDI, Jokin, 08005 Barcelona (ES)
(74) Representative: Torner, Juncosa I Associats, SL

(56) References cited:
- EP-A1- 3 434 652
- JP-A- 2004 035 338

## Description

### Technical field

The present invention is directed towards an automated production method and a manufacturing tooling thereof.

The glass receptacle produced by this invention comprises a receptacle mouth surrounded by a neck ring, a receptacle body and a thread placed between said neck ring and said body. It will be referred to as the improved glass receptacle through out the description, however it does not form part of the invention.

Positioning the thread below the neck ring, instead of above the neck ring as is usual, provides several advantages such as hiding the neck ring within the cap when threaded to the thread.

### State of the Art

Glass receptacles with a receptacle body, a receptacle mouth surrounded with a thread are known, as well as the automated production method thereof and the manufacturing tooling required.

This known production method and tooling comprises a blank mold where a melted glass preform is molded.

Typically, the blank mold includes a specific mold part, independent from the rest of the blank mold and exchangeable, adapted to mold the receptacle mouth, and the neck ring surrounding it with great dimensional precision.

Later, with the still molted glass constitutive of the preform, the preform is transferred to a blow mold by a transfer device grasping the preform through the neck ring.

According to the already known solutions, when the glass receptacle includes thread ridges those thread ridges are located between the neck ring and the receptacle mouth and are molded with great dimensional precision by said specific mold part of the blank mold, because in the blow mold the precision required for a functional thread ridge cannot be satisfactorily achieved.

When the preform is transferred to the blow mold, the receptacle mouth, the neck ring and the thread ridges are kept outside the blow mold while the rest of the preform, constitutive of a body precursor region, is blown-molded inside the blow mold obtaining the finished receptacle body shape without altering the receptacle mouth, the neck ring and the thread ridges kept outside the blow mold.

In the specific mold part of the blank mold the thread ridges can be molded with great precision, but during the transferring and/or due to the contraction produced during the cooling process, the threads can suffer deformations beyond the acceptable tolerances, leading to a poor capping or to an elevated rejection ratio during the quality inspection of the produced receptacles.

The thread ridges cannot be formed solely in the blow mold, instead of in being formed in the blank mold, because at this stage the molten glass is cooler and the air pressure inside the preform can be insufficient to obtain the complete insertion of the molten glass in the finishing thread grooves of the blow mold.

According to this common practice, the neck ring is defined between the thread ridges and the receptacle body, spacing apart the thread ridges from the receptacle body, thus when the receptacle is capped with a cap, such a twist-off cap, the neck ring remains visible producing an undesirably visual effect.

Also, having the neck ring interposed between the blow mold and the thread ridges reduces the effect of the blow-molding process on the thread ridges, minimizing its deformations during this stage.

Machines for automatically manufacturing glass receptacles with industrial production volumes used today are all based on this manufacturing principle, described for the first time in patent US774690 from 1904. EP 3 434 652 A1 and JP 2004 035338 A disclose more recent manufacturing machines.

The above and other problems are solved by the proposed improved production method and manufacturing tooling, which provides a receptacle including precise thread ridges around its mouth with a reduced defective rate, among other advantages.

### Brief description of the invention

According to a first aspect, the present invention concerns to an automated production method of improved glass receptacles, as defined in claim 1.

The proposed method comprises, in a manner already known in the state of the art, the following steps:
molding, in a blank mold, a melted glass preform including a body precursor region and a receptacle mouth region including a receptacle mouth and a starting thread ridges therearound;
transferring the melted glass preform from the blank mold to a blow mold keeping at least a portion of the receptacle mouth region outside the blow mold;
blow-molding the body precursor region into a finished receptacle body of the glass receptacle while still molted by blowing a pressurized gas through the receptacle mouth;
extracting and cooling the glass receptacle from the blow mold.

According to that, a predefined amount of molten glass, required to produce one glass receptacle, is introduced in the blank mold where it is shaped as a glass preform.

The glass preform defined by the blank mold includes a receptacle mouth region with a mouth, typically a cylindrical wall surrounding a central hole which later constitutes the access to the hollow interior of the receptacle. Surrounding said cylindrical wall constitutive of the mouth there are starting thread ridges protruding outwardly in a radial direction, distributed around the mouth. The mouth region is connected to the body precursor region, where the molten glass required to shape the receptacle body is accumulated.

Typically, the blank mold is upside down, so that the molten glass is pushed into the receptacle neck ring region by its weight and by the molten glass falling inertia, molding the receptacle mouth with the mouth and the starting thread ridges in said receptacle neck ring region with great precision.

In some cases, the blank mold can be pressurized with pressurized gas which further pushes the molten glass towards the receptacle mouth region of the blank mold.

Later, the preform is transferred from the blank mold to the blow mold by a transfer device. Typically, the transfer device moves at least a portion of the receptacle mold region of the blank mold, with the portion of the receptacle mouth region formed therein attached thereto to a position adjacent to an entrance to the blow mold, inserting most of the preform in the blow mold through said entrance while keeping a portion of the receptacle mouth, which was used as a grasping point of the preform for the transfer device, outside the blow mold.

In the blow mold the body precursor region is blown-molded into the finished receptacle body, while a portion of the receptacle mouth remains unchanged outside the blow mold.

The present invention further proposes, in a manner not known in the state of the art, the following:
during the transferring, insert the starting thread ridges of the preform in finishing thread grooves included in the blow mold at a register, the starting thread ridges becoming the finished thread ridges after the blow-molding in the blow mold.

According to this, the thread ridges are mold as starting thread ridges on the preform. Later the starting thread ridges are inserted at a register into finishing thread grooves and, during the blow-molding stage, achieve the final form as finished thread ridges with great precision.

In the blank mold the starting thread ridges can be molded with great precision, but during the transferring and/or due to the contraction produced during the cooling process, the threads can suffer deformations beyond the acceptable tolerances, leading to a poor capping or to an elevated rejection ratio during the quality inspection of the produced receptacles.

To solve this problem, the present invention proposes to intentionally and precisely control the starting thread ridges during the blow-molding operation in the blow mold maintaining its dimensions unchanged, correcting any distortion produced during the transferring of the preform, or even slightly reshaping the starting thread ridges into the finished thread ridges, for example by blowing each starting thread ridge outwards producing a slight increase in its volume of up to 5%, obtaining the precise shape of the finished thread ridges defined by the finished thread grooves.

In this manner, precise thread ridges with tight tolerances can be created.

According to a second aspect, the present invention is directed towards an improved glass receptacle manufacturing tooling.

The proposed manufacturing tooling comprises, in a manner already known in the state of the art:
a blank mold adapted for molding a melted glass preform, the blank mold including a body precursor mold region, adapted for molding a body precursor region in the preform, and a receptacle neck ring region with starting thread grooves therearound, adapted for molding a receptacle mouth region with a receptacle mouth in the preform with starting thread ridges therearound;
a blow mold including a receptacle body blow mold region adapted for blow-molding the body precursor region into a finished receptacle body of the glass receptacle while still molted by blowing a pressurized gas through the receptacle mouth;
a transfer device adapted for transferring the melted glass preform from the blank mold to a blow mold keeping at least a portion of the receptacle mouth region outside the blow mold.

The proposed manufacturing tooling further comprises, in a manner not known in the available state of the art, the following:
the blow mold further comprises finishing thread grooves adapted for receiving the starting thread ridges of the preform, and
the transfer device is adapted for inserting the starting thread ridges in the finishing thread grooves of the blow mold at a register.

This manufacturing tooling allows the implementation of the above described production method.

Not forming part of the invention, it is also disclosed here-after an improved glass receptacle comprising, in a manner already known in the state of the art:
the improved receptacle comprises a finished receptacle body and a receptacle mouth region including a receptacle mouth, a neck ring protruding from the receptacle mouth region around it and finished thread ridges protruding from the receptacle mouth region around it.

The proposed improved glass receptacle further comprises, in a manner not known in the available state of the art, the following:
the finished thread ridges are placed between the neck ring and the finished receptacle body; and
the outer diameter of the neck ring is smaller than the outer diameter of the finished thread ridges and/or is equal to the surface from which the finished thread ridges protrude, including an annular groove between the neck ring and the finished thread ridges.

According to that, the finished thread ridges are placed below the neck ring, instead of above as is the common state of the art solution.

Other features of the invention appear from the following detailed description of an embodiment.

### Brief description of the Figures

The foregoing and other advantages and features will be more fully understood from the following detailed description of an embodiment with reference to the accompanying drawings, to be taken in an illustrative and non-limitative manner, in which:
Fig. 1 shows a schematic vertical cross section of a glass bottle, obtained from the proposed method, with finished thread ridges around the neck ring and with a cap attached thereto;
Fig. 2 shows a schematic vertical cross section of a blank mold in closed position;
Fig. 3 shows a schematic vertical cross section of the blank mold in closed position with a melted glass preform formed therein;
Fig. 4 shows the schematic vertical cross section of the blank mold shown in Fig. 3, but in an open position;

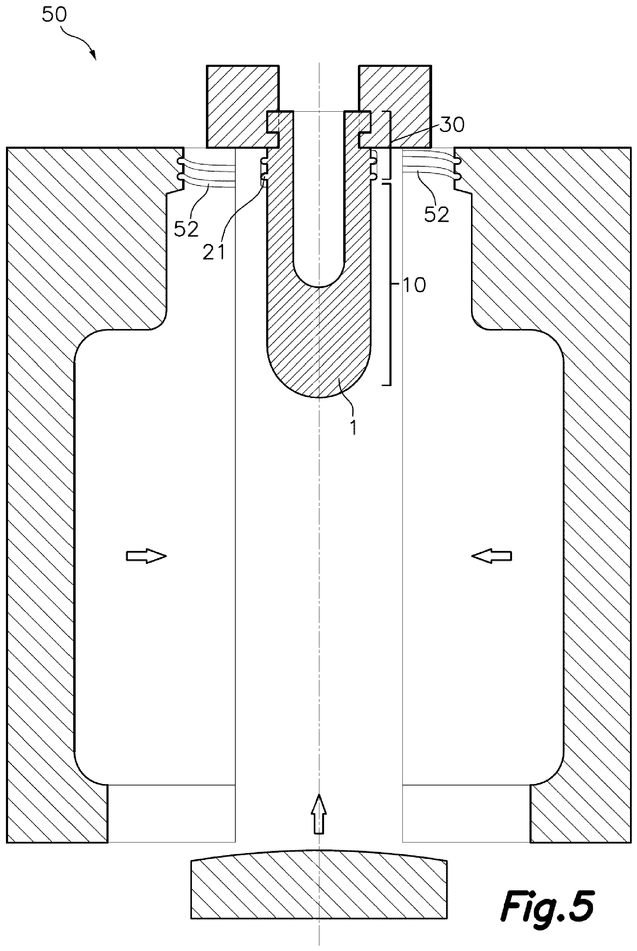

Fig. 5 shows a schematic vertical cross section of a blow mold in an open position, with the melted glass preform placed therein, supported through the neck ring by the transfer device;

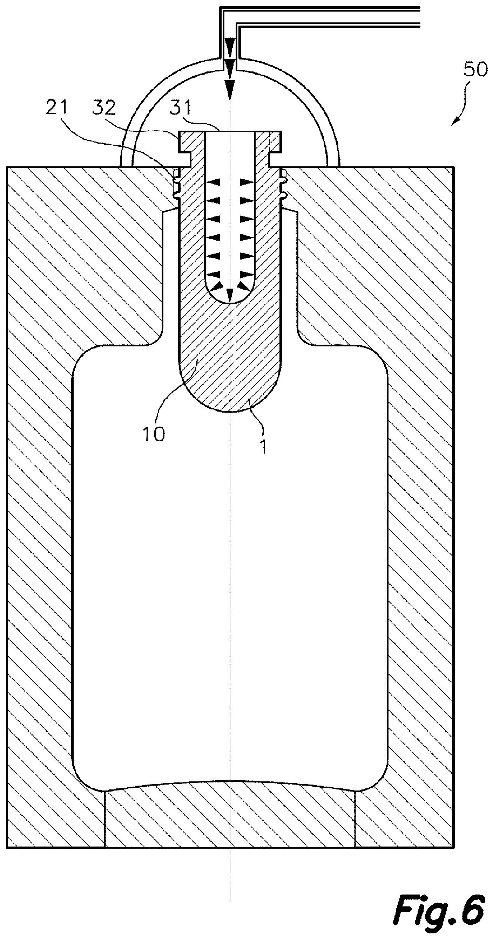

Fig. 6 shows a schematic vertical cross section of the blow mold shown in Fig. 5 in a closed position, with the melted glass preform placed therein while injecting pressurized gas for blow molding;

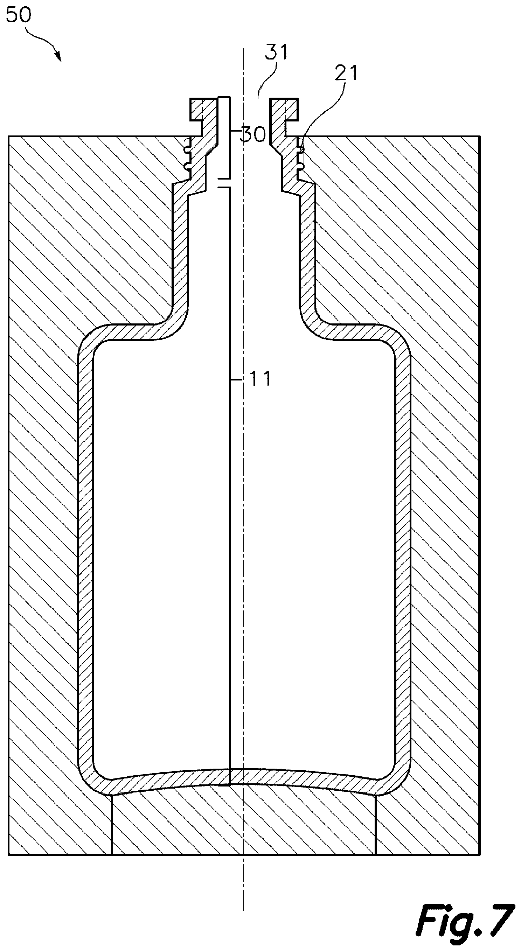

Fig. 7 shows a schematic vertical cross section of the blow mold shown in Fig. 6 in a closed position, with the glass receptacle obtained from the blow molding of the molten glass preform placed therein;
Fig. 8 shows a schematic vertical cross section of the blow mold shown in Fig. 6 in an open position, with the glass receptacle obtained;
Fig. 9 shows a schematic vertical cross section of a glass jar, obtained from the proposed method, with finished thread ridges around the neck ring and with a twist-off cap detached therefrom;
Fig. 10 shows the same as Fig. 9 but with the twist-off cap attached to the finished thread ridges;
Fig. 11 shows a front view of the glass jar and the twist-off cap of Fig. 9, the annular groove including first register configurations.

### Detailed description of an embodiment

The foregoing and other advantages and features will be more fully understood from the following detailed description of an embodiment with reference to the accompanying drawings, to be taken in an illustrative and not limitative way.

The present invention proposes an improved glass receptacle manufacturing tooling for producing such improved glass receptacles and an automated production method for producing such improved glass receptacles.

The proposed improved glass receptacle comprises a finished receptacle body 11 and a receptacle mouth region 30 including a receptacle mouth 31, a neck ring 32 protruding from the receptacle mouth region 30 around it and finished thread ridges 22 protruding from the receptacle mouth region 30 around it.

The finished receptacle body 11 is formed by glass wall surrounding a hollow cavity of the receptacle constitutive of the vast majority of the receptacle storage capacity. The receptacle mouth 31 is defined by a tubular glass wall, typically cylindrical, frustoconical, polygonal or with other hollow shapes, surrounding a central channel connected to said hollow cavity. The finished thread ridges 22 are protruding thread configurations defined around said receptacle mouth 31, on the outer periphery of said tubular region, for attaching a cap 60 to the receptacle.

The present invention proposes to place the finished thread ridges 22 between the neck ring 32 and the finished receptacle body 11.

The outer diameter of the neck ring 32 will be smaller than the outer diameter of the finished thread ridges 22 and/or will be equal to the of surface receptacle mouth region 30 from which the finished thread ridges 21 protrude, including an annular groove between the neck ring 32 and the finished thread ridges 22.

This feature ensures that a cap with thread configurations complementary to the finished thread ridges can be inserted in the receptacle mouth 31 without interfering with the neck ring 32.

According to the state of the art known solutions, such finished thread ridges 22 are not placed below the neck ring but between the neck ring and the mouth opening of the receptacle or on the external surface of the neck ring 32.

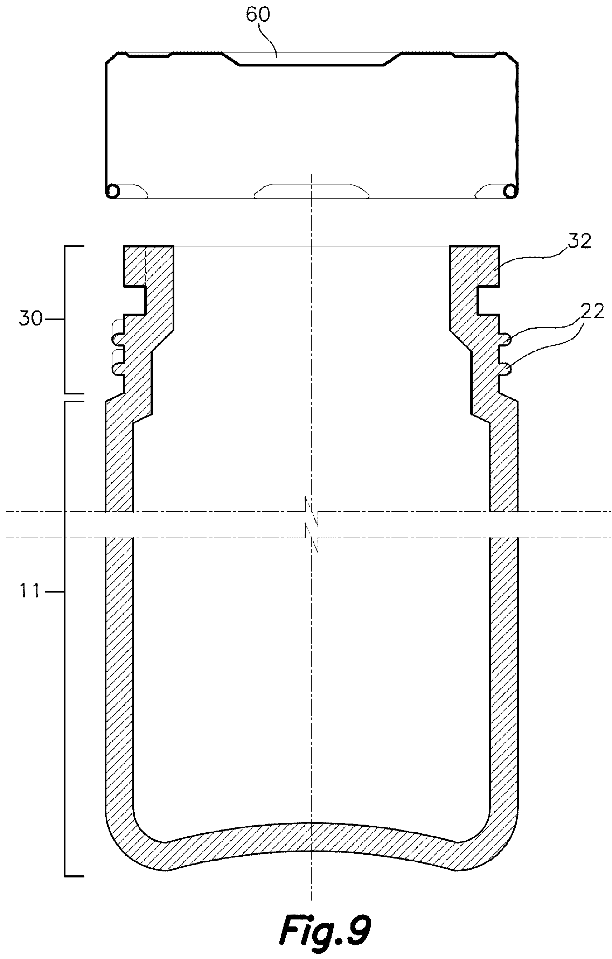

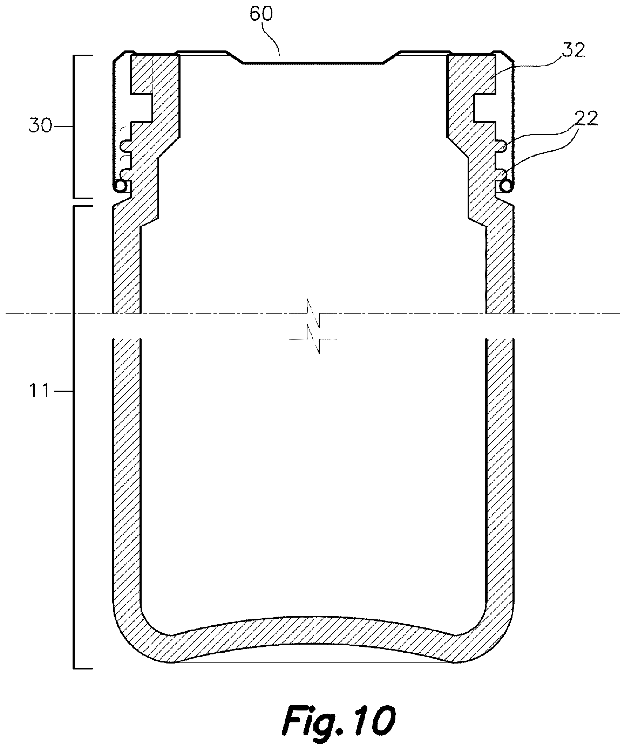

Thanks to the placement of the finished thread ridges below the neck ring 32, the neck ring 32 can be hidden in the cap 60, for example a twist-off cap 60 as shown in Figs. 9, 10 and 11, when it is closed and the space between the cap 60 and the shoulders of the receptacle can be minimized.

A twist-off cap is a cap made of a single thin metal sheet shaped to include a perimetral skirt surrounding the receptacle mouth region. In the twist-off caps, the thread configurations, complementary to the finished thread ridges of the glass receptacle, are defined by inward bending or inward curling the edge of the cap skirt, shaped to engage with the finished thread ridges of the glass receptacle.

It will be understood that the shoulders are a widening of the receptacle coincident with the connection between the finished receptacle body 11 and the receptacle mouth region 30.

Preferably, between the finished thread ridges and the shoulders there is a gap distance of at least 2mm, or of at least 3mm, to prevent the creation of optic distortions around the shoulders and to prevent deformations in the finished thread ridges due to the formation of the shoulders during the blow molding operation.

It is also preferred that, between the finished thread ridges and the shoulders there is a gap distance smaller than 6mm, or smaller than 5mm, to reduce the distance between the cap 60 and the shoulders.

Optionally, the improved glass receptacle is capped with a twist-off cap engaged to the finished thread ridges 22, the twist-off cap covering the neck ring 32 of the receptacle mouth region 30 and optionally an outer perimeter of the twist-off cap is flush with an outer perimeter of the finished receptacle body 11.

The thread configurations of the twist-off cap are preferably defined as an inward bending of the edge of the twist-off cap.

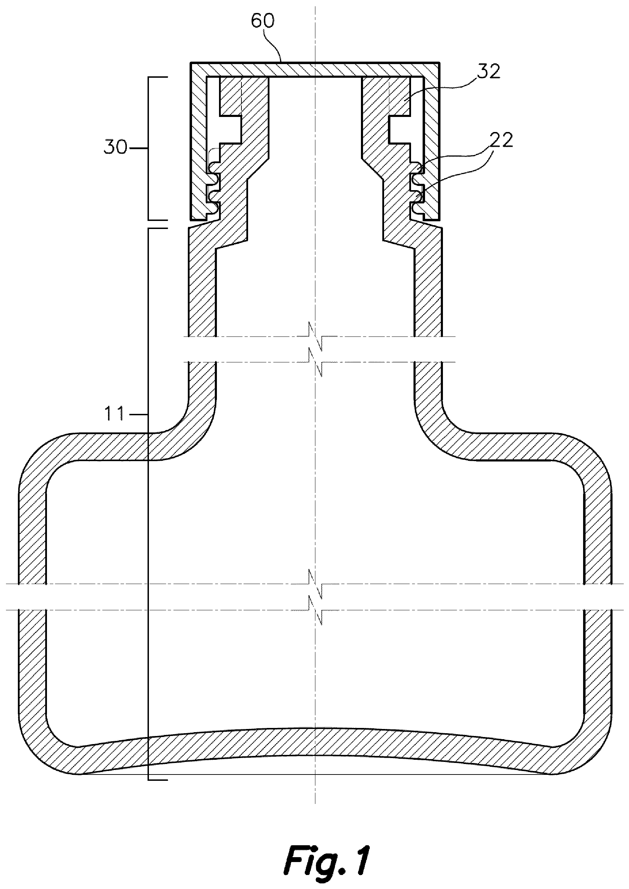

The improved glass receptacle described above is typically a bottle, such as shown in Fig. 1, or a jar, such as shown in Figs. 9, 10 and 11, and is obtained by the proposed manufacturing tooling and/or using the proposed manufacturing method.

The proposed manufacturing tooling, adapted for producing the improved glass receptacle described above, comprises a blank mold 40 adapted for molding a melted glass preform 1, a blow mold 50 adapted for blow-molding the melted glass preform therein to obtain the improved glass receptacle described above, and a transfer device adapted for transferring the melted glass preform 1 from the blank mold 40 to the blow mold 50 keeping at least a portion of the receptacle mouth region 30 outside the blow mold 50, providing a grasping region for retaining the molten glass preform during the blow-molding operation.

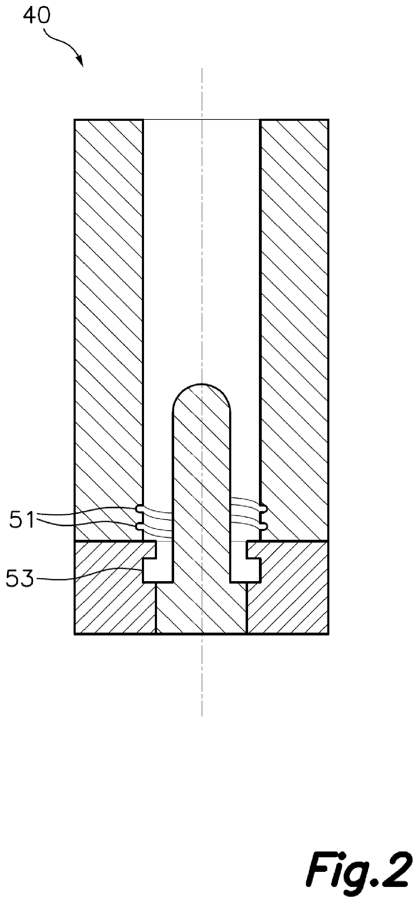

The blank mold 40, seen in Figs. 2, 3 and 4, includes a body precursor mold region, adapted for molding a body precursor region 10 in the preform 1, and a receptacle neck ring region with starting thread grooves 51 therearound, adapted for molding a receptacle mouth region 30 with a receptacle mouth 31 in the preform 1 with starting thread ridges 21 therearound. Typically, the receptacle mouth region 30 comprises a plunge which define in the preform 1 a central cavity surrounded by a tubular wall constitutive of the receptacle mouth 31.

The blow mold 50 includes a receptacle body blow mold region adapted for blow-molding the body precursor region into a finished receptacle body of the glass receptacle while still melted by blowing a pressurized gas through the receptacle mouth 31.

In addition to the above, the blow mold 50 further comprises finishing thread grooves 52 adapted for receiving the starting thread ridges 21 of the preform 1 and for blow-molding the preform into the finished glass receptable. After the blow-molding operation the starting thread ridges 21 become the finished thread ridges 22.

According to the above, the blank mold 40 includes starting thread grooves 51 defined around the portion of the blank mold 40 constitutive of the receptacle neck ring region. The starting thread ridges 21 of the preform 1 are created by said starting thread grooves 51 around the receptacle mouth 31.

The blow mold 50 includes finishing thread grooves 52 defined around a portion of the blow mold 50 surrounding the receptacle mouth 31. Those finishing thread grooves 52 maintain stable the dimensions of the starting thread ridges 21, or correct any deformations thereof suffered during the transference of the preform 1 into the blow mold 50 or complete the shaping of the starting thread ridges 21 of the preform 1 into the finished thread ridges 22 of the finished glass receptacle during the blow-molding operation, which produces air pressure in the receptacle mouth 31 pushing the starting thread ridges 21 of the preform against the finishing thread grooves 52 housing said starting thread ridges 21, maintaining its dimensional stability when the starting thread ridges 21 completely match the shape and dimensions of the finishing thread grooves 52, or correcting small distortions of the starting thread ridges 21 or expanding the starting thread ridges 21 into the finished thread ridges 22 when the starting thread ridges 21 are smaller than the finishing thread grooves 52, typically up to 5% smaller.

The creation of the starting thread ridges 21 and the later insertion of said starting thread ridges 21 into the finished thread grooves 52 during the blow-molding operation provides an improvement in the dimensional precision of the finished thread ridges 22.

Those starting thread grooves 51 and finishing thread grooves 52 are typically elongated helicoidal grooves.

According to the above, each of the starting thread grooves 51 may have the same size than the corresponding finishing thread groove 52, or alternatively the volume of each of the starting thread grooves 51 may be up to 5% smaller than the volume of the corresponding finishing thread groove 52.

According to the proposed invention, the transfer device is adapted for inserting the starting thread ridges 21 in the finishing thread grooves 52 of the blow mold 50 at a register, i.e., precisely positioning the starting thread ridges 21 into the finishing thread grooves 52 of the blow mold 50.

According to an additional embodiment, the blank mold 40 includes, in the receptacle neck ring region, a neck ring groove 53 therearound, defining an annular protrusion between the neck ring groove 53 and the starting thread grooves 51.

The neck ring groove 53 is adapted for molding a neck ring 32 protruding from the receptacle mouth region 30 of the preform 1 around it, and the annular protrusion being adapted for molding an annular groove around the receptacle mouth region 30.

Said neck ring 32 typically has the shape of an annular flange surrounding the receptacle mouth 31 and provides a grasping configuration for the transfer device.

The transfer device can be a clamping device configured to grasp the annular flange of the preform, and for transferring the preform from the blank mold to the blow mold. It is common to use the portion of the blank mold 40, which defines the neck ring 32 on the preform 1, as the clamping device, so that once the blank mold 40 is open, a portion thereof surrounding the neck ring 32 is not open, retaining the preform 1 grasped, and is moved to transfer the preform 1 into the blow mold 50. Later this portion of the blank mold 40 is open releasing the neck ring 32 and returns to the initial position where it is coupled again with the other portions of the blank mold 40 to close the blank mold 40 and produce another melted glass preform 1.

According to the above, the transferring device comprises a grasping configuration formed by a portion of the blank mold 40 including the neck ring groove 53 but not including the starting thread grooves 51.

Preferably, the starting thread grooves 51 of the blank mold 40 are placed between the neck ring groove 53 and the body precursor mold region of the blank mold 40. In this case, the diameter of the neck ring groove 53 bottom is preferably smaller than the diameter of the starting thread grooves 51 bottom and/or is preferably equal than the surface of the blank mold 40 on which the starting thread grooves 51 are engraved.

Optionally, the finishing thread grooves 52 of the blow mold 50 can be defined adjacent to an open end of the blow mold 50, which is adapted to keep the neck ring 32 of the preform 1 outside of the blow mold 50 during the blow-molding while the starting thread ridges 21 remain inserted in the finishing thread grooves 52.

According to an embodiment of the proposed manufacturing tooling, the neck ring groove 53 and/or the annular protrusion includes at least one first register configuration precursor, or several first register configuration precursors, or several first register configuration precursors uniformly distributed therearound, adapted to mold the annular groove and/or the neck ring 32 including at least one first register configuration 33. The transfer device will include second register configurations complementary to the first register configurations 33 adapted to ensure a precise angular position of the melted glass preform 1 relative to the blow mold 50, ensuring the register of the starting thread ridges 21 with the finishing thread grooves 52.

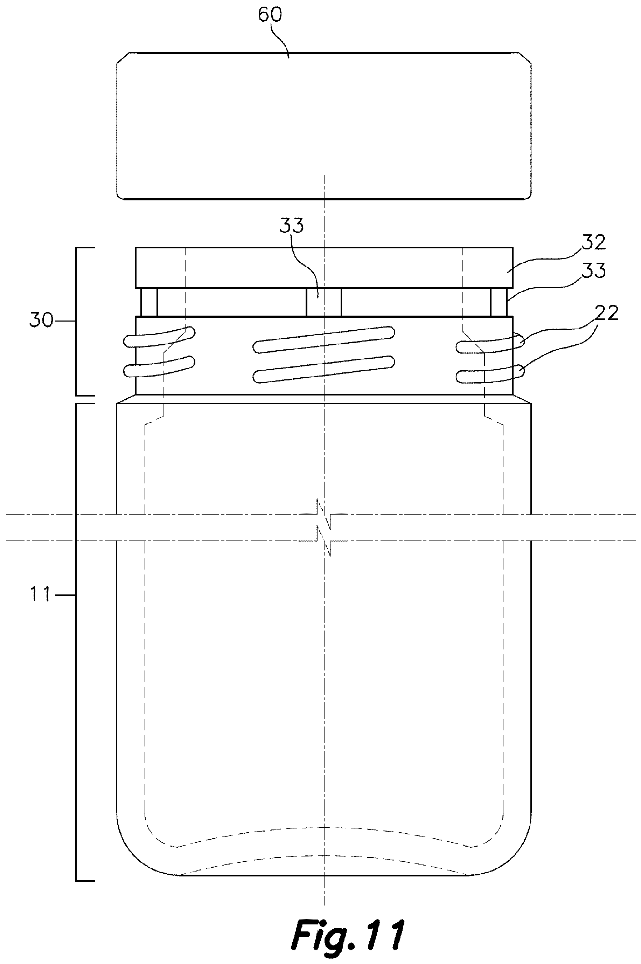

According to a preferred embodiment of the first register configurations 33 shown in Fig. 11, those configurations are projections contained in the annular groove, or interruptions of such annular groove, preferably at least two, three or four projections or interruptions uniformly distributed around the annular groove. Alternatively, the first register configurations 33 can be depressions or grooves defined in the neck ring or projections protruding thereof, for example at least two, three or four depressions, grooves or projections uniformly distributed around the neck ring.

The proposed automated production method of improved glass receptacles comprises the steps of molding, in the blank mold 40 described above, a melted glass preform 1 including a body precursor region 10 and a receptacle mouth region 30 including a receptacle mouth 31 and starting thread ridges 21 therearound.

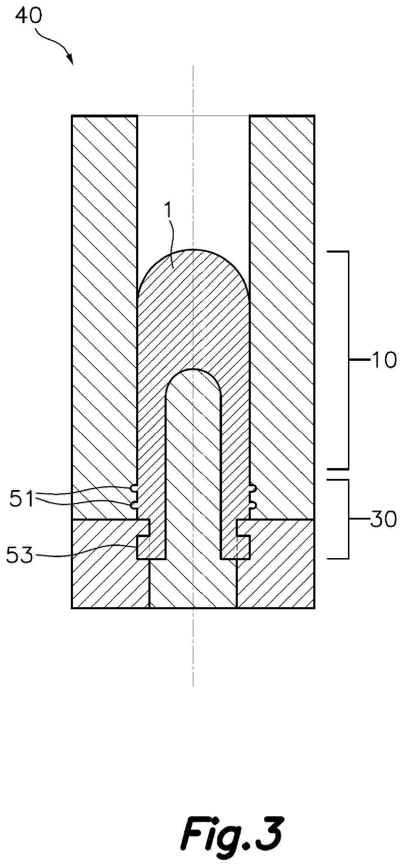

According to that, a melted glass is poured in the blank mold 40, producing a preform 1 made of melted glass, as seen in Fig. 3. Optionally pressurized gas can be introduced in the blank mold 40 to push the melted glass against the receptacle neck ring region of the blank mold 40 obtaining a more precise molding.

The blank mold 40 shapes the preform 1 defining a body precursor region 10, where a quantity of molten glass is accumulated intended for later expansion by blowing in a blow mold 50 to form the body of the glass container, and also defining a receptacle mouth region 30 in the preform 1. Said receptacle mouth region 30 includes a receptacle mouth 31, defined as a tubular region surrounding a central cavity defined by a plunger of the blank mold 40, and starting thread ridges 21 defined around said receptacle mouth 31, on the outer periphery of said tubular region.

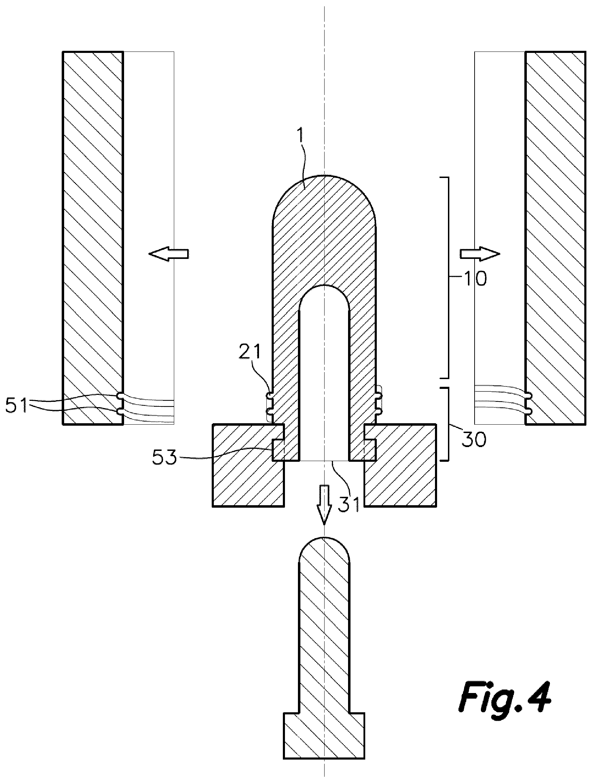

Once the preform 1 has been formed, the blank mold 40 is opened, as seen in Fig. 4, and then the molten glass preform 1 is transferred to a blow mold 50 keeping at least a portion of the receptacle mouth region 30 outside the blow mold 50. This portion of the receptacle mouth region 30 is typically used as a grasping region for the transfer device used to grasp the molten gras preform 1 during its transfer.

Once the melted glass preform 1 has been transferred to the open blow mold 50, the blow mold is closed around the preform 1, and later the body precursor region 10 of the preform 1 is blow-molded into a finished receptacle body 11 of the glass receptacle while still molted by blowing a pressurized gas through the receptacle mouth 31.

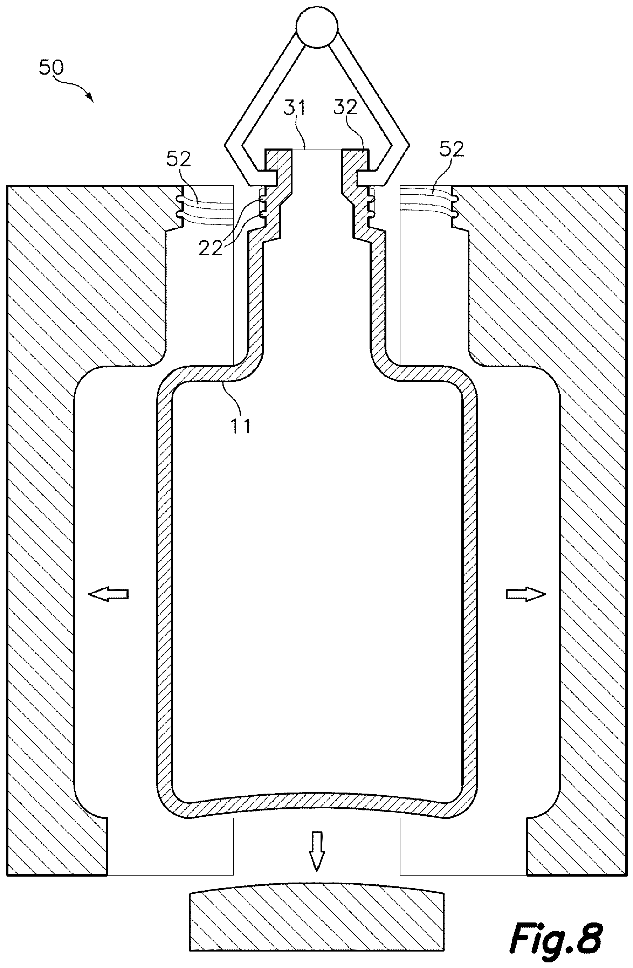

After that, the already formed receptacle is extracted from the blow mold 50, typically grasping the receptacle through the neck ring using an extraction clamp as shown in Fig. 8 which preferably does not interfere with the finished thread ridges 22 located below to prevent any unintended deformation and cooled.

The present invention proposes that, during the transferring, the starting thread ridges 21 of the preform 1 are inserted in finishing thread grooves 52 included in the blow mold 50 at a register, the starting thread ridges 21 becoming the finished thread ridges 22 after the blow-molding in the blow mold 50.

Doing so, the starting thread ridges 21 become the finished thread ridges 22 in the finishing thread grooves 52 during the blow-molding in the blow mold 50, obtaining the improved glass receptacle with finished thread ridges 22.

According to one embodiment of the present invention, the starting thread ridges 21 remain dimensionally stable during the blow-molding, producing finished thread ridges 22 identical to the starting thread ridges 21 obtained from the blank mold 40. According to this, the shape and size of the starting thread ridges 21 obtained from the blank mold is identical to the shape and size of the finished thread ridges 22, and during the blow-molding no deformation thereof is produced, or only corrections of minor deformations suffered for the starting thread ridges 21 during the transferring thereof, but without producing an increase of the dimensions thereof.

Alternatively, the volume of the starting thread ridges 21 protruding from the receptacle mouth region 30 expands up to 5% during the blow-molding producing finished thread ridges 22 bigger than the starting thread ridges 21. According to that, the starting thread ridges 21 obtained from the blank mold are up to 5% smaller than the finished thread ridges 22 obtained from the blow mold after the blow-molding process. The finishing thread grooves 52 of the blow mold are bigger than the starting thread ridges 21 inserted therein at a register, and when pressurized gas is injected in the preform to perform the blow-molding, this pressure produces an expansion of the starting thread ridges 21 within the finishing thread grooves 52 producing their expansion, becoming the finished thread ridges 22.

The preform 1 is preferably molded in the blank mold 40 including an annular groove therearound, defined between the starting thread ridges 21 and a neck ring 32 protruding from the receptacle mouth region 30 around it, the melted glass preform 1 being grasped by a transfer device through said neck ring 32 during its transfer to the blow mold 50.

The grasping region described above for grasping the preform during its transfer typically includes the neck ring 32, in the shape of an annular flange, surrounding the receptacle mouth 31, for easy grasping.

Typically, this neck ring 32 is formed by a neck ring groove defined in the receptacle neck ring region of the blank mold 40 adjacent to the starting thread grooves. The neck ring groove is adapted for molding the neck ring 32 around the receptacle mouth region 30 of the preform 1.

Preferably, the starting thread ridges are formed between the neck ring and the body precursor region of the preform 1, the outer diameter of the neck ring 32 being smaller than the outer diameter of the starting thread ridges 21 and/or being equal to the surface of the receptacle mouth region 30 from which the starting thread ridges 21 protrude and therefore flush to it.

Optionally, the neck ring 32 is formed in the portion of the receptacle mouth portion 30 which, after the transfer of the preform 1, remains outside of the blow mold 50 during the blow-molding, said blow-molding not affecting the neck ring.

According to a preferred embodiment, the transferring is produced by grasping the preform through the neck ring 32 with a transfer device without contacting the starting thread ridges.

The annular groove and/or the neck ring 32 is preferably molded including at least one first register configuration 33, or several first register configurations 33, or several first register configurations 33 uniformly distributed therearound, the transfer device including second register configurations complementary to the first register configurations 33 adapted to ensure a precise angular position of the melted glass preform 1 relative to the blow mold 50, ensuring the register of the starting thread ridges 21 with the finishing thread grooves 52.

According to that, thanks to the engagement between the first and second register configurations, the angular position of the preform 1 regarding the transfer device is precisely determined. The precise position of the transfer device in regard to the blow mold produces the precise angular positioning of the preform in the blow mold, allowing for the insertion of the starting thread ridges 21 into the finishing thread grooves 52 of the blow mold at a register.

## Claims

1. Automated production method of improved glass receptacles, the method comprising:
molding, in a blank mold (40), a melted glass preform (1) including a body precursor region (10) and a receptacle mouth region (30) including a receptacle mouth (31) and starting thread ridges (21) therearound;
transferring the melted glass preform (1) from the blank mold (40) to a blow mold (50) keeping at least a portion of the receptacle mouth region (30) outside the blow mold (50)
blow-molding the body precursor region (10) into a finished receptacle body (11) of the glass receptacle while still molted by blowing a pressurized gas through the receptacle mouth (31);
extracting and cooling the glass receptacle from the blow mold (50);
**characterized in that** during the transferring, insert the starting thread ridges (21) of the preform (1) in finishing thread grooves (52) included in the blow mold (50) at a register, the starting thread ridges (21) becoming the finished thread ridges (22) after the blow-molding in the blow mold (50).

2. The automated production method according to claim 1 wherein the starting thread ridges (21) remain dimensionally stable during the blow-molding, producing finished thread ridges (22) identical to the starting thread ridges (21) obtained from the blank mold (40), or wherein the volume of the starting thread ridges (21) protruding from the receptacle mouth region (30) expands up to 5% during the blow-molding producing finished thread ridges (22) bigger than the starting thread ridges (21).

3. The automated production method according to claim 1 or 2 wherein the melted glass preform (1) is molded, in the blank mold (40), including an annular groove therearound, defined between the starting thread ridges (21) and a neck ring (32) protruding from the receptacle mouth region (30) around it, the melted glass preform (1) being grasped by a transfer device through said neck ring (32) during its transfer to the blow mold (50).

4. The automated production method according to claim 3 wherein the starting thread ridges are formed between the neck ring and the body precursor region of the preform (1), the outer diameter of the neck ring (32) being smaller than the outer diameter of the starting thread ridges (21) and/or being equal to the surface from which the starting thread ridges (21) protrude.

5. The automated production method according to claim 4 wherein the neck ring (32) is formed in the portion of the receptacle mouth portion (30) which, after the transfer, remains outside the blow mold (50) during the blow-molding, the blow-molding not affecting the neck ring.

6. The automated production method according to claim 3, 4 or 5 wherein the annular groove and/or the neck ring (32) is molded including at least one first register configuration (33), or several first register configurations (33), or several first register configurations (33) uniformly distributed therearound, the transfer device including second register configurations complementary to the first register configurations (33) adapted to ensure a precise angular position of the melted glass preform (1) relative to the blow mold (50), ensuring the register of the starting thread ridges (21) with the finishing thread grooves (52).

7. Improved glass receptacle manufacturing tooling comprising
a blank mold (40) adapted for molding a melted glass preform (1), the blank mold (40) including a body precursor mold region, adapted for molding a body precursor region (10) in the preform (1), and a receptacle neck ring region with starting thread grooves therearound, adapted for molding a receptacle mouth region (30) with a receptacle mouth (31) in the preform (1) with starting thread ridges (21) therearound;
a blow mold (50) including a receptacle body blow mold region adapted for blow-molding the body precursor region into a finished receptacle body of the glass receptacle while still molted by blowing a pressurized gas through the receptacle mouth;
a transfer device adapted for transferring the melted glass preform (1) from the blank mold (40) to a blow mold (50) keeping at least a portion of the receptacle mouth region (30) outside the blow mold (50);
**characterized in that**
the blow mold further comprises finishing thread grooves adapted for receiving the starting thread ridges of the preform; and
the transfer device is adapted for inserting the starting thread ridges (21) in the finishing thread grooves (52) of the blow mold at a register.

8. The manufacturing tooling according to claim 7 wherein each of the starting thread grooves (51) has the same size than the corresponding finishing thread groove (52), or wherein the volume of each of the starting thread grooves (51) up to 5% smaller than the corresponding finishing thread groove (52).

9. The manufacturing tooling according to claim 7 or 8 wherein the blank mold (40) includes, in the receptacle neck ring region, a neck ring groove (53) therearound, defining an annular protrusion between the neck ring groove (53) and the starting thread grooves (51), the neck ring groove (53) being adapted for molding a neck ring (32) protruding from the receptacle mouth region (30) of the preform (1), around it, and the annular protrusion being adapted for molding an annular groove around the receptacle mouth region (30).

10. The manufacturing tooling according to claim 9 wherein the starting thread grooves (51) of the blank mold (40) are placed between the neck ring groove (53) and the body precursor mold region of the blank mold (40), the diameter of the neck ring groove (53) bottom being smaller than the diameter of the starting thread grooves (51) bottom and/or being equal than the surface on which the starting thread grooves (51) are engraved.

11. The manufacturing tooling according to claim 10 wherein the finishing thread grooves of the blow mold (50) are defined adjacent to an open end of the blow mold, which is adapted to keep the neck ring (32) of the preform outside of the blow mold (50) during the blow-molding when the starting thread ridges are inserted in the finishing thread grooves.

12. The manufacturing tooling according to claim 9, 10 or 11 wherein the neck ring groove (53) and/or the annular protrusion including at least one first register configuration precursor, or several first register configuration precursors, or several first register configuration precursors uniformly distributed therearound, adapted to mold the annular groove and/or the neck ring (32) including at least one first register configuration (33), and wherein the transfer device includes second register configurations complementary to the first register configurations (33) adapted to ensure a precise angular position of the melted glass preform (1) relative to the blow mold (50), ensuring the register of the starting thread ridges (21) with the finishing thread grooves (52).

## Patentansprüche

1. Automatisiertes Herstellungsverfahren für verbesserte Glasbehälter, wobei das Verfahren Folgendes umfasst:
Formen, in einer Rohform (40), eines geschmolzenen Glasvorformlings (1), der einen Körpervorläuferbereich (10) und eine Behältermundregion (30) beinhaltet, die einen Behältermund (31) und um diesen herum beginnende Gewindewülste (21) aufweist;
Überführen des geschmolzenen Glasvorformlings (1) aus der Rohform (40) in eine Blasform (50), wobei mindestens ein Teil der Behältermundregion (30) außerhalb der Blasform verbleibt (50)
Blasformen des Körpervorläuferbereichs (10) zu einem fertigen Behälterkörper (11) des Glasbehälters, während dieser noch geschmolzen ist, durch Einblasen eines Druckgases durch den Behältermund (31);
Entnehmen und Abkühlen des Glasbehälters aus der Blasform (50);
**dadurch gekennzeichnet, dass** während des Überführens die beginnenden Gewindewülste (21) des Vorformlings (1) in Endgewindegräben (52), die in der Blasform (50) beinhaltet sind, passgenau eingeführt werden, wobei die beginnenden Gewindewülste (21) nach dem Blasformen in der Blasform (50) zu den fertigen Gewindewülsten (22) werden.

2. Automatisiertes Herstellungsverfahren nach Anspruch 1, wobei die beginnenden Gewindewülste (21) während des Blasformvorgangs formstabil bleiben, wodurch fertige Gewindewülste (22) erzeugt werden, die identisch sind mit den beginnenden Gewindewülsten (21), die aus der Rohform (40) erhalten werden, oder wobei sich das Volumen der aus der Behältermundregion (30) herausragenden beginnenden Gewindewülste (21) während des Blasformens um bis zu 5 % ausdehnt, wodurch fertige Gewindewülste (22) entstehen, die größer sind als die beginnenden Gewindewülste (21).

3. Automatisiertes Herstellungsverfahren nach Anspruch 1 oder 2, wobei der geschmolzene Glasvorformling (1) in der Rohform (40) geformt wird, einschließlich einer ringförmigen Nut ringsum, die zwischen den beginnenden Gewindewülsten (21) und einem Halsring (32) definiert ist, der aus der Behältermundregion (30) um diese herum hervorsteht, wobei der geschmolzene Glasvorformling (1) während seines Überführens zur Blasform (50) von einer Überführungsvorrichtung durch den Halsring (32) ergriffen wird.

4. Automatisiertes Herstellungsverfahren nach Anspruch 3, wobei die beginnenden Gewindewülste zwischen dem Halsring und dem Körpervorläuferbereich des Vorformlings (1) ausgebildet sind, wobei der Außendurchmesser des Halsrings (32) kleiner ist als der Außendurchmesser der beginnenden Gewindewülste (21) und/oder gleich der Oberfläche ist, aus der die beginnenden Gewindewülste (21) hervorstehen.

5. Automatisiertes Herstellungsverfahren nach Anspruch 4, wobei der Halsring (32) in jenem Abschnitt des Behältermundabschnitts (30) ausgebildet ist, der nach dem Überführen während des Blasformens außerhalb der Blasform (50) verbleibt, wobei das Blasformen den Halsring nicht beeinträchtigt.

6. Automatisiertes Herstellungsverfahren nach Anspruch 3, 4 oder 5, wobei die ringförmige Nut und/oder der Halsring (32) so geformt sind, dass sie mindestens eine erste Passkonfiguration (33) oder mehrere erste Passkonfigurationen (33) enthalten, oder mehrere erste Passkonfigurationen (33), die gleichmäßig um diese herum verteilt sind, wobei die Überführungsvorrichtung zweite Passkonfigurationen beinhaltet, die zu den ersten Passkonfigurationen (33) komplementär sind und dazu angepasst sind, eine präzise Winkelposition des geschmolzenen Glasvorformlings (1) relativ zur Blasform (50) sicherzustellen, wodurch die Passung der beginnenden Gewindewülste (21) mit den Endgewindegräben (52) gewährleistet wird.

7. Verbessertes Herstellungswerkzeug für Glasbehälter, umfassend
eine Rohform (40), die angepasst ist, um einen geschmolzenen Glasvorformling (1) zu formen, die Rohform (40) einen Körpervorläufer-Formbereich, der zum Formen eines Körpervorläuferbereichs (10) in dem Vorformling (1) angepasst ist, und einen Behälterhalsringbereich mit beginnenden Gewindegräben um diesen herum beinhaltet, der zum Formen eines Behältermundbereichs (30) mit einer Behältermündung (31) in dem Vorformling (1) mit beginnenden Gewindewülsten (21) um diesen herum angepasst ist;
eine Blasform (50), die einen Blasformbereich für den Behälterkörper beinhaltet, der angepasst ist, um den Körpervorläuferbereich durch Blasen eines Druckgases durch den Behältermund in einen fertigen Behälterkörper des Glasbehälters zu formen, solange dieser noch geschmolzen ist;
eine Überführungsvorrichtung, die zum Überführen des geschmolzenen Glasvorformlings (1) aus der Rohform (40) in eine Blasform (50) angepasst ist, wobei mindestens ein Teil der Behältermundregion (30) außerhalb der Blasform verbleibt (50);
**dadurch gekennzeichnet, dass**
die Blasform ferner Endgewindegräben umfasst, die für die Aufnahme der beginnenden Gewindewülste des Vorformlings ausgelegt sind; und
die Überführungsvorrichtung so ausgelegt ist, dass sie die beginnenden Gewindewülste (21) passgenau in die Endgewindegräben (52) der Blasform einführt.

8. Herstellungswerkzeug nach Anspruch 7, wobei jeder der beginnenden Gewindegräben (51) dieselbe Größe wie der entsprechende Endgewindegraben (52) aufweist, oder wobei das Volumen jedes der beginnenden Gewindegräben (51) bis zu 5 % kleiner ist als das des entsprechenden Endgewindegrabens (52).

9. Herstellungswerkzeug nach Anspruch 7 oder 8, wobei die Rohform (40) im Behälterhalsringbereich eine Halsringnut (53) ringsum enthält, die einen ringförmigen Vorsprung zwischen der Halsringnut (53) und den beginnenden Gewindegräben (51) definiert, wobei die Halsringnut (53) angepasst ist, um einen aus der Behältermundregion (30) des Vorformlings (1) herausragenden Halsring (32) um diesen herum zu formen und der ringförmige Vorsprung angepasst ist, um eine ringförmige Nut um die Behältermundregion (30) herum zu formen.

10. Herstellungswerkzeug nach Anspruch 9, wobei die beginnenden Gewindegräben (51) der Rohform (40) zwischen der Halsringnut (53) und des Körpervorläufer-Formbereichs der Rohform (40) platziert sind, wobei der Durchmesser des Bodens der Halsringnut (53) kleiner ist als der Durchmesser des Bodens der beginnenden Gewindegräben (51) und/oder gleich der Fläche ist, auf der die beginnenden Gewindegräben (51) eingraviert sind.

11. Herstellungswerkzeug nach Anspruch 10, wobei die Endgewindegräben der Blasform (50) benachbart an ein offenes Ende der Blasform ausgebildet sind, das angepasst ist, dass der Halsring (32) des Vorformlings während des Blasformens außerhalb der Blasform (50) verbleibt, wenn die beginnenden Gewindewülste in die Endgewindegräben eingeführt sind.

12. Herstellungswerkzeug nach Anspruch 9, 10 oder 11, wobei die Halsringnut (53) und/oder der ringförmige Vorsprung mindestens einen Vorläufer einer ersten Passkonfiguration oder mehrere Vorläufer einer ersten Passkonfiguration oder mehrere gleichmäßig um diesen herum verteilte Vorläufer einer ersten Passkonfiguration beinhaltet, die dazu angepasst sind, die ringförmige Nut und/oder den Halsring (32) mit mindestens einer ersten Passkonfiguration (33) zu formen, und wobei die Überführungsvorrichtung zweite Registerkonfigurationen beinhaltet, die zu den ersten Registerkonfigurationen (33) komplementär sind und dazu angepasst sind, eine präzise Winkelposition des geschmolzenen Glasvorformlings (1) relativ zur Blasform (50) sicherzustellen, wodurch die Passung der beginnenden Gewindewülste (21) mit den fertigen Gewindegräben (52) gewährleistet wird.

## Revendications

1. Procédé automatisé de production de récipients en verre améliorés, le procédé comprenant
mouler, dans un moule d'ébauche (40), une préforme en verre fondu (1) comprenant une région précurseur de corps (10) et une région de bouche de récipient (30) comprenant une bouche de récipient (31) et des crêtes de filetage initiales (21) disposées autour de celle-ci ;
transférer la préforme en verre fondu (1) du moule d'ébauche (40) vers un moule de soufflage (50) en maintenant au moins une partie de la région de bouche de récipient (30) à l'extérieur du moule de soufflage (50) ;
souffler la région précurseur de corps (10) pour former un corps de récipient fini (11) du récipient en verre alors que celui-ci est encore fondu, en soufflant un gaz sous pression à travers la bouche de récipient (31) ;
extraire et refroidir le récipient en verre du moule de soufflage (50) ;
**caractérisé en ce que**, lors du transfert, on insère les crêtes de filetage initiales (21) de la préforme (1) dans des rainures de filetage de finition (52) comprises dans le moule de soufflage (50) avec mise en registre, les crêtes de filetage initiales (21) devenant des crêtes de filetage finales (22) après le soufflage dans le moule de soufflage (50).

2. Procédé automatisé de production selon la revendication 1, dans lequel les crêtes de filetage initiales (21) restent dimensionnellement stables pendant le soufflage, produisant des crêtes de filetage finales (22) identiques aux crêtes de filetage initiales (21) obtenues à partir du moule d'ébauche (40), ou dans lequel le volume des crêtes de filetage initiales (21) faisant saillie de la région de bouche de récipient (30) s'accroît jusqu'à 5 % pendant le soufflage, produisant des crêtes de filetage finales (22) plus grandes que les crêtes de filetage initiales (21).

3. Procédé automatisé de production selon la revendication 1 ou 2, dans lequel la préforme en verre fondu (1) est moulée, dans le moule d'ébauche (40), en comprenant une rainure annulaire disposée autour de celle-ci, définie entre les crêtes de filetage initiales (21) et une bague de col (32) faisant saillie de la région de bouche de récipient (30) autour de celle-ci, la préforme en verre fondu (1) étant saisie par un dispositif de transfert par ladite bague de col (32) lors de son transfert vers le moule de soufflage (50).

4. Procédé automatisé de production selon la revendication 3, dans lequel les crêtes de filetage initiales sont formées entre la bague de col et la région précurseur de corps de la préforme (1), le diamètre extérieur de la bague de col (32) étant inférieur au diamètre extérieur des crêtes de filetage initiales (21) et/ou étant égal à la surface à partir de laquelle les crêtes de filetage initiales (21) font saillie.

5. Procédé automatisé de production selon la revendication 4, dans lequel la bague de col (32) est formée dans la portion de la région de bouche de récipient (30) qui, après le transfert, reste à l'extérieur du moule de soufflage (50) pendant le soufflage, le soufflage n'affectant pas la bague de col.

6. Procédé automatisé de production selon la revendication 3, 4 ou 5, dans lequel la rainure annulaire et/ou la bague de col (32) est moulée en comprenant au moins une première configuration de mise en registre (33), ou plusieurs premières configurations de mise en registre (33), ou plusieurs premières configurations de mise en registre (33) uniformément réparties autour de celle-ci, le dispositif de transfert comprenant des secondes configurations de mise en registre complémentaires des premières configurations de mise en registre (33), agencées pour assurer une position angulaire précise de la préforme en verre fondu (1) par rapport au moule de soufflage (50), assurant la mise en registre des crêtes de filetage initiales (21) avec les rainures de filetage de finition (52).

7. Outillage de fabrication de récipients en verre améliorés comprenant :
un moule d'ébauche (40) adapté pour mouler une préforme en verre fondu (1), le moule d'ébauche (40) comprenant une région de moulage de précurseur de corps, adaptée pour mouler une région précurseur de corps (10) dans la préforme (1), et une région de bague de col de récipient avec des rainures de filetage initiales disposées autour de celle-ci, adaptée pour mouler une région de bouche de récipient (30) avec une bouche de récipient (31) dans la préforme (1) avec des crêtes de filetage initiales (21) disposées autour de celle-ci ;
un moule de soufflage (50) comprenant une région de moule de soufflage de corps de récipient adaptée pour souffler la région précurseur de corps afin de former un corps de récipient fini du récipient en verre alors que celui-ci est encore fondu en soufflant un gaz sous pression à travers la bouche de récipient ;
un dispositif de transfert adapté pour transférer la préforme en verre fondu (1) du moule d'ébauche (40) vers un moule de soufflage (50) en maintenant au moins une partie de la région de bouche de récipient (30) à l'extérieur du moule de soufflage (50) ;
**caractérisé en ce que**
le moule de soufflage comprend en outre des rainures de filetage de finition adaptées pour recevoir les crêtes de filetage initiales de la préforme ; et
le dispositif de transfert est agencé pour insérer les crêtes de filetage initiales (21) dans les rainures de filetage de finition (52) du moule de soufflage avec mise en registre.

8. Outillage de fabrication selon la revendication 7, dans lequel chacune des rainures de filetage initiales (51) a la même taille que la rainure de filetage de finition correspondante (52), ou dans lequel le volume de chacune des rainures de filetage initiales (51) est jusqu'à 5 % inférieur à celui de la rainure de filetage de finition correspondante (52).

9. Outillage de fabrication selon la revendication 7 ou 8, dans lequel le moule d'ébauche (40) comprend, dans la région de bague de col de récipient, une rainure de bague de col (53) disposée autour de celle-ci, définissant une saillie annulaire entre la rainure de bague de col (53) et les rainures de filetage initiales (51), la rainure de bague de col (53) étant adaptée pour mouler une bague de col (32) faisant saillie de la région de bouche de récipient (30) de la préforme (1), autour de celle-ci, et la saillie annulaire étant adaptée pour mouler une rainure annulaire autour de la région de bouche de récipient (30).

10. Outillage de fabrication selon la revendication 9, dans lequel les rainures de filetage initiales (51) du moule d'ébauche (40) sont placées entre la rainure de bague de col (53) et la région de moulage de précurseur de corps du moule d'ébauche (40), le diamètre du fond de la rainure de bague de col (53) étant inférieur au diamètre du fond des rainures de filetage initiales (51) et/ou étant égal à la surface sur laquelle les rainures de filetage initiales (51) sont gravées.

11. Outillage de fabrication selon la revendication 10, dans lequel les rainures de filetage de finition du moule de soufflage (50) sont définies à proximité d'une extrémité ouverte du moule de soufflage, laquelle est adaptée pour maintenir la bague de col (32) de la préforme à l'extérieur du moule de soufflage (50) pendant le soufflage lorsque les crêtes de filetage initiales sont insérées dans les rainures de filetage de finition.

12. Outillage de fabrication selon la revendication 9, 10 ou 11, dans lequel la rainure de bague de col (53) et/ou la saillie annulaire comprend au moins un précurseur de première configuration de mise en registre, ou plusieurs précurseurs de première configuration de mise en registre, ou plusieurs précurseurs de première configuration de mise en registre uniformément répartis autour de celle-ci, adaptés pour mouler la rainure annulaire et/ou la bague de col (32) comprenant au moins une première configuration de mise en registre (33), et dans lequel le dispositif de transfert comprend des secondes configurations de mise en registre complémentaires des premières configurations de mise en registre (33) adaptées pour assurer une position angulaire précise de la préforme en verre fondu (1) par rapport au moule de soufflage (50), assurant la mise en registre des crêtes de filetage initiales (21) avec les rainures de filetage de finition (52).
